# EUROPEAN PATENT APPLICATION

(11) **EP 4 481 678 A1**
(43) Date of publication of application: **25.12.2024**
(21) Application number: 23181295.9
(22) Date of filing: 23.06.2023
(51) Int. Cl.: G06T 7/00

(54) **REMOVAL OF DEFECTS FROM A SURFACE OF A BUFFED TYRE CASING**

(71) Applicant: Bridgestone Europe NV/SA, 1930 Zaventem (BE)
(72) Inventor: Bram Jozef, Vincent, 1930 Zaventem (BE)
(74) Representative: Marchetti, Alessio

(57) **Abstract**

A method of selecting a treatment process for removing defects from a surface of a buffed casing of a pneumatic tyre using a neural network model, the method comprising: receiving image data of a portion of the surface of the buffed casing; processing, using the neural network, the image data to detect at least one defect and to generate for each detected defect a corresponding score distribution over a set corresponding possible tyre defect types; and selecting a treatment process for the portion of the surface from a set of treatment processes based on the at least one score distribution.

## Description

### Technical Field

The present disclosure relates to methods and systems for detecting defects on a surface of a buffed casing of a pneumatic tyre, as well as processes for removing those defects.

### Background

When the tread of the tyre of a vehicle (i.e. the part of the tyre which touches the road) is worn out, it is often economical and environmentally friendly to replace the worn tread with a new tread, rather than installing a completely new tyre on the vehicle. The process of replacing the tread is often referred to as "re-treading". The re-treading of a tyre typically includes three steps. Firstly, the worn tread is removed, leaving the "buffed casing" of the tyre exposed. Secondly, the surface of the buffed casing is inspected for local defects. A treatment (also known as "skiving") is applied to the tyre in order to remove the identified defects. Finally, a new tread is applied to the "skived" casing, and the re-treaded tyre is installed on a vehicle for further use.

It is generally desirable to provide automatic stations for performing the re-treading to reduce (or eliminate completely) the need for intervention by a human operator. Even when automatic defect inspection and skiving are performed automatically, defects may not be identified correctly or surface treatments may be applied that are not appropriate for the identified defects. Thus these stations often still require undesirable manual input by an operator.

### Summary

The present invention aims to provide new and useful methods and systems for detecting surface defects on tyres and selecting treatment processes for removing surface defects on tyres.

A first aspect of the invention relates to a method of detecting defects on a surface of a buffed casing of a pneumatic tyre. The method may be performed by an automatic tyre inspection and skiving station as part of a re-treading process applied to the tyre (for example after the worn tread has been removed and before a new tread is applied). The tyre is mounted on a rotation device configured to rotate the tyre stepwise around a rotational axis of the tyre. The rotation device comprises an angular encoder for controlling the angular position of the tyre. The method comprises stepwise rotating the tyre. Capturing, using a camera having a single line of pixels (also known as a "linear camera"), a one-dimensional array of pixel intensity values (a "line image") for a corresponding imaging portion of an equatorial surface of the casing for every halt in the stepwise rotation. The method further comprises associating each one-dimensional array of pixel intensity values with a corresponding angular position of tyre, combining the plurality of one-dimensional arrays to form two-dimensional image data of the equatorial surface of the casing based on the associated angular position of the tyre, and processing the two-dimensional image data of the equatorial surface of the casing to detect defects.

This aspect of the invention enables, for example, detection of surface defects on the tyre casing faster than conventional systems, by using the linear camera to image the relevant portion of the casing's surface. Conventional systems may rely on cameras which capture two-dimensional images. Such cameras are typically slower than linear cameras. Further, a two-dimensional image captured by a camera may include a significant region that is unusable for defect detection because the tyre surface in this portion is out-of-focus (since the most relevant portion of the tyre surface, the equatorial surface, is curved). Thus, the time spent on acquiring and processing these regions, and the memory used to store the corresponding image data, is typically wasted. In contrast, all imaging portions imaged by the linear camera can be in focus, resulting in improved efficiency of the defect detection process. The present invention may thereby improve the productivity of automatic tyre inspection stations.

In an embodiment, the tyre may comprise a first and a second shoulder, and each imaging portion may extend substantially from the first to the second shoulder of the tyre. Thus, defects may be detected at any position between the shoulders.

In an embodiment, the method may further comprise steps of capturing, by using a profilometer, three-dimensional profile data of the equatorial surface of the casing, and identifying, from the profile data, one or more regions of interest on the equatorial surface. The region(s) of interest can be identified in a number of ways (for example by thresholding the profile data or by using a neural network). In one example, the region(s) of interest may be identified as regions having anomalous distance values of the profile data, i.e. profile data values that are greater than a threshold value, such as a predetermined threshold value. The method may further comprise steps of identifying portion(s) of the image data corresponding to the one or more regions of interest on the equatorial surface, and processing the or each identified portion of the image data to detect defects.

Thus, the three-dimensional profile data can be used to identify regions of interest such that only image data corresponding to these regions is further processed. In other words, the profile data can be used to filter the image data to extract the portions relevant for further image processing. In this way, less image data is processed and the overall time needed to detect defects on the tyre surface can be reduced.

In the above, processing the or each identified portion of the image data to detect defects may comprise:
processing, using a neural network, the or each identified portion of the image data to detect defects and to generate, for the or each detected defect, a score distribution over a set of corresponding possible tyre defect types, and
selecting a respective treatment process for the or each region of interest on the equatorial surface from a set of treatment processes based on the score distribution of the defects detected in the corresponding portion of the image data.

In this way, a corresponding treatment process appropriate to each of multiple types of detect may be chosen automatically. This means that an appropriate respective treatment process for each defect may be chosen more rapidly and reliably than if the treatment process were selected by a skilled human operator. The method may further comprise a step of applying to the or each region of interest on the equatorial surface the respective selected treatment process.

The neural network model may comprise a convolutional neural network, i.e. a neural network containing at least one convolutional layer which applies a trained kernel to a 2-dimensional data set. Experimentally, it has been found that such a network is able to process patches of image data corresponding to regions of interest which were identified as explained above, to generate labels for defects which agreed with labels generated by a human expert.

This concept provides a second, independent aspect of the invention which is a method of selecting a treatment process for removing defects from a surface of a buffed casing of a pneumatic tyre using a neural network model. The method may be implemented on one or more computing devices. The computing device(s) may be connected to an automatic tyre inspection and skiving station. The method comprises receiving image data of a portion of the surface of the buffed casing. The image data may be generated by the inspection and skiving station connected to the computing device. For example, the image may be captured using a linear camera (as in the first aspect of the invention) or using a two-dimensional camera. The method further comprises processing, using the neural network, the image data to detect at least one defect and to generate for each detected defect a score distribution over a set of defect labels (e.g. "clean skive", "rust", "frayed metal", "no belt", "unknown", and the like). The set of defect labels includes defect labels associated with corresponding possible tyre defect types, and optionally at least one defect label ("unknown") which is not associated with a defect type of the set of defect types (e.g. it may be assigned to defects which are not included in the set of defect types). The neural network may be of any known architecture suitable for performing object detection and classification on input images. For example, the neural network model may comprise a convolutional neural network.

This aspect of the invention may enable more informed decisions as to which treatment process should be selected. This is because the neural network can typically recognise (and distinguish between) a larger number of defect types than conventional methods of processing images of surface defects of buffed casings. This allows selection of the most appropriate treatment for a particular portion of the tyre without requiring a skilled human operator to make that decision, and so can increase the efficiency of an inspection and skiving station.

In either the first or second aspects of the invention, the neural network may be trained with known supervised learning methods. For example, the neural network may be trained by adjusting network parameters of the neural network so as to encourage the neural network to process a (manually) labelled training dataset to detect defects and generate score distributions so as to match the respective labels of the training dataset. The method further comprises selecting a treatment process for the portion of the surface from a set of treatment processes based on the score distribution. In an embodiment, the method may further comprise a step of applying the selected treatment process to the portion of the surface using a repair device controlled by the one or more computer devices (e.g. by using a tool attached to a positioning device, such as a robotic arm).

A third aspect of the invention relates to a method of selecting a treatment process for removing defects from a surface of a buffed casing of a pneumatic tyre. The method comprises capturing, by using a profilometer, three-dimensional profile data of at least one portion of the surface of the casing (for example a portion of the equatorial surface or of the sidewalls of the casing), processing the profile data to determine a total number of defects on the at least one portion of the surface, and determining whether the total number of defects is below a defect number threshold. The method further comprises, conditional on determining that the total number of defects is below a defect number threshold, applying a first treatment process to the surface of the buffed casing, acquiring image data of an equatorial surface of the casing, processing the image data of the equatorial surface of the casing to detect defects, and selecting a further treatment process from a set of treatment processes based on the detected defects on the equatorial surface of the casing.

Due to the determination of whether the number of defects is below a threshold, treatment processes are not performed on tyres in the case that, following the treatment processes, the tyre would have an expected future lifetime which unacceptably short. Thus, uneconomic repairs are avoided, as well as reducing the risks to occupants of vehicles which are fitted with tyres which are liable to fail quickly.

The first treatment process may comprise applying a wire brush to the casing of the tyre.

In an embodiment, the method may further comprise a step of applying the selected further treatment process to the surface of the buffed casing (e.g. by using a tool attached to a robotic arm).

This aspect of the invention makes it possible to speed up the inspection and skiving of a tyre casing. This is because by the application of the first treatment process may already remove a number of defects before the relatively slow steps of image acquisition and image processing are performed (to identify defect-specific treatment). This can reduce the time needed to perform these steps and can increase the productivity of a defect inspection and skiving station.

A fourth aspect of the invention relates to a method of determining whether (or not) to apply a treatment process for removing defects from a surface of a buffed casing of a pneumatic tyre. The method comprises receiving tyre-specific usage data. The method further comprises determining a defect number threshold based on the received tyre-specific usage data, capturing, by using a profilometer, three-dimensional profile data of at least a portion of the surface of the casing, processing the profile data to determine a total number of defects on the at least one portion of the surface, and determining whether the total number of defects is below the defect number threshold. The method further comprises, conditional on determining that the total number of defects is below the defect number threshold, determining to apply the treatment process for removing defects from a surface, and applying the treatment process to the tyre. If the total number of defects is equal or higher than the defect number threshold, the tyre may be considered to be not suited for re-treading.

This aspect of the invention makes it possible to use available information about the history of a tyre to assess accurately its suitability for re-treading. This allows the implementation of detailed safety considerations and to reduce cost (e.g. by avoiding further processing steps if the tyre is found to be not suitable).

The tyre-specific usage data may, for example, specify, a previous application of the tyre. This may be by specifying a previous application (e.g. truck tyre, bus tyre, and the like) from a predetermined set of possible applications of the tyre. Additionally or alternatively, the tyre-specific usage data may specify (at least) a previous measurement of a physical quantity of the tyre (for example the results of a previous defect inspection), or a servicing history of the tyre. In an alternatively, the tyre-specific usage data may be specify an intended use of the tyre (e.g. by specifying one of the predetermined set of applications of the tyre), e.g. irrespective of previous applications of the tyre.

The tyre-specific usage data of the tyre may be stored on (and retrieved from) a device mounted in or on or otherwise attached to the tyre (e.g. a tyre-mounted sensor (TMS) unit attached to the tire, or a wireless transmitting device such as Radio Frequency Identification (RFID) tag mounted in or on the tyre). Additionally or alternatively, the tyre-specific usage data may be stored on (and retrieved from) from a database. The database may be stored in a remotely located cloud server or in a local server. When the tyre-specific usage data is stored on a database, an identification code which uniquely identifies the tyre may be used to retrieve the correct tyre-specific usage data from the database (the identification code may be on the tyre or stored in a device mounted in or on the tyre). Generally, the tyre-specific usage data may be updated throughout the life cycle of a specific tyre. The tyre-specific usage data may additionally or alternatively include the date of manufacture, the manufacturer, a model number, a batch or serial number, and/or further details specifying the tyre's life cycle. In an embodiment, the tyre-specific usage data may further specify defects detected (e.g. number of defects, defect types, and the like) during a previous re-treading process applied to the tyre.

In a further example, the tyre-specific usage data may be indicative of type of past user of the tyre (i.e. it may comprise a label which indicates one of a predetermined plurality of user classes). This is important because past use of the tyre may be correlated with future use of the tyre, so that the tyre-specific usage data is indicative of that future use. For example, if the past use of the tyre was in a vehicle for passengers (e.g. a school bus), a higher level of safety may be desirable, and accordingly a lower defect number threshold than the defect number threshold applicable, for example, to a truck. More generally, the defect number threshold may depend on a user class (user type) indicated by the user class.

In an embodiment, applying the treatment process to the surface of the buffed casing may comprise acquiring image data of an equatorial surface of the casing, and processing the image data to (i) detect surface defects, (ii) associate with each detected defect at least one defect label from a set of defect labels, and (iii) determine a total number of defects associated with each label of the set of defect labels. The method further comprises: determining, based on the received tyre-specific usage data, a corresponding set of further defect number thresholds, each further defect number threshold being associated with one label of the set of defect labels; determining, for each label in the set of defect labels, whether the total number of defects associated with the respective label is below the corresponding further defect number threshold; and conditional on determining that, for each label in the set defect labels, the total number of defects associated with the respective label is below the corresponding further defect number threshold, applying the treatment process to the surface of the buffed casing.

Considering individual threshold values for the various defect types allows the implementation of more refined safety considerations. For example, the threshold value for "rust" defects (i.e. the number of maximally allowed "rust" defects before the tyre is deemed to be unsuited for re-treading) may be higher for a truck tyre than for a bus tyre. Note that some types of defect may be of greater importance depending upon the use of the tyre. For example, certain types of defect are more liable to lead to future problems in the case of tyres which are to be used in vehicles which carry heavy loads, or which experience extreme weather conditions.

Although there are benefits from using multiple ones of the first to fourth aspects of the invention in combination, each of these aspects is independent and may be used in the absence of the others. For example, image data employed in the second to fourth aspects of the invention may be captured by an imaging device configured to capture two-dimensional arrays of intensity values.

Fifth to eight aspects of the invention relate to a system configured to perform the method according to the first to fourth aspect respectively.

### Brief Description of the Drawings

Embodiments of the invention will now be described, by way of example only, with reference to the accompanying schematic drawings, in which:
Figure 1 illustrates schematically an example system for detecting defects on a surface of a buffed casing of a pneumatic tyre;
Figure 2 is a flow diagram of an example method for detecting defects on a surface of a buffed casing;
Figure 3 illustrates schematically an example system for defect classification;
Figure 4A shows example images of buffed tyre casings;
Figure 4B shows a table of experimentally obtained defect classification results;
Figure 5 is a flow diagram of an example method for selecting a treatment process for removing defects from a surface of a buffed casing using a neural network model;
Figure 6 illustrates schematically an example system for implementing the method of Figure 5;
Figure 7 illustrates an example score distribution for each of three defects;
Figure 8 illustrates an example scheme for assigning a treatment score;
Figure 9 shows an example of mapping data for selecting a treatment based on a treatment score;
Figure 10 is a flow diagram of a further example method for selecting a treatment process for removing defects from a surface of a buffed casing;
Figure 11 is a flow diagram of an example method for determining whether to apply a treatment process for removing defects; and
Figure 12 is a flow diagram of an example method for performing automatic skiving of a buffed casing.

### Detailed Description

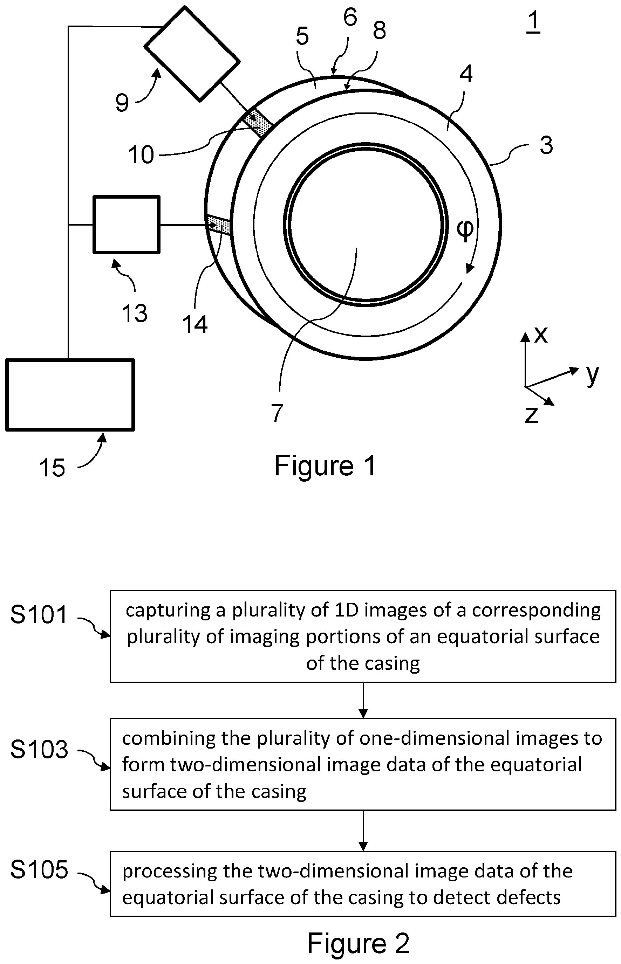

Figure 1 shows a system 1 for inspecting pneumatic tyres, for example truck tyres, bus tyres, and the like. The system 1 may be used for tyres which are undergoing a re-treading process. In particular, the system 1 is suitable for detecting defects on a surface of a tyre which worn tread has been removed in an initial step of the re-treading process (such a tyre is also known as a buffed tyre casing or a buffed tyre carcass). The system 1 may be operated in an automatic manner, i.e. only requiring minimal (if any) human intervention. In embodiments, the system 1 may be part of an automatic defect inspection and skiving station that performs defect detection and defect-removal treatments on buffed casings. Buffed tyre casings which have been inspected and treated by such a defect inspection and skiving station may then be subject to further steps of the re-treading process (e.g. the application of a new tread). In some embodiments, the system 1 is part of an automatic re-treading station.

The system 1 comprises a motorised hub 7 for releasable mounting of a tyre 3 and for rotating the tyre 3 around its rotational axis (in the embodiment of Figure 1 the rotational axis of the tyre 3 is parallel to the z-axis). The motorised hub 7 may comprise a servo motor with an angular encoder for controlling the angular position of the tyre 3. The tyre 3 in the embodiment of Figure 1 is a buffed tyre casing. In broad terms, an outer, exposed surface of the buffed tyre casing 3 may have surface defects (commonly referred to as injuries). Such defects may affect whether the tyre casing 3 is suitable for re-treading. Frequently these defects need to be removed before a new tread can be applied to the tyre casing 3.

The outer surface of the tyre casing 3 may comprise a generally-toroidal curved surface 5 (also known as equatorial surface or "crown" portion of the casing) and two opposing sidewall portions 4 (one sidewall portion 4 is visible in Figure 1, the other sidewall portion is located on an opposite side of the tyre casing 3 and is not visible in this view). The intersections of the sidewalls 4 with the equatorial surface 5 form the shoulders 6, 8 of the tyre casing 3.

The system 1 further comprises a camera 9 configured to image an elongate portion of the outer surface of the tyre casing 3. In particular, the camera 9 has only a single line of pixels (such a camera is also known as a "linear camera" and the resulting images are known as "line images" or "one-dimensional images"). Thus, for each acquired "line image" the camera 9 may output a one-dimensional array of pixel intensity values (i.e. a one-dimensional array comprising numerical values specifying the measured pixel intensities at respective locations spaced apart in the z-direction). In the embodiment of Figure 1, the camera 9 may be colour camera (e.g. the camera may provide a RGB value for each of the pixel intensity values). In other embodiments, the camera 9 may be a monochrome camera.

In the embodiment of Figure 1, the camera 9 is configured to image a portion 10 of the equatorial surface 5. In particular, the camera 9 may be arranged so that the imaging portion 10 extends substantially over substantially the entire length of the equatorial surface 5 in the z-direction, i.e. from shoulder 6 to shoulder 8. The imaging portion 10 may be narrower along the z-direction than in a circumferential direction of the equatorial surface 5 (i.e. a direction of rotations about the axis of the tyre). In particular, the imaging portion 10 may extend in the circumferential direction of equatorial surface 5 only to a length corresponding to an imaging length of one pixel of the camera 9. For example, the imaging portion 10 may extend along the circumferential direction of equatorial surface 5 for less than 1 mm.

In an embodiment, the camera 9 may be mounted on a robotic arm which is configured to adjust the position of the camera 9 such that the imaging portion 10 is in focus of the camera 9 (i.e. such that, for example, the spatial resolution, sharpness, and/or contrast of the resulting image meets a sufficiency criterion). Additionally or alternatively, the camera 9 may comprise an adjustable focusing system configured to bring the imaging portion 10 into focus.

The system 1 further comprises a control unit 15 configured to control the rotation of tyre casing 3 by the motorised hub 7 and the image acquisition by the camera 9. As described below with reference to Figure 2, an image of the entire equatorial surface 5 can be generated by combining a plurality of line images acquire by the camera 9. To this end, the control unit 15 may synchronise the acquisition of the line images with a stepwise rotation of the tyre casing 3 (by the motorised hub 7) such that one of the plurality of line images is captured for every halt in the stepwise rotation.

The system 1 may further comprise a profilometer camera 13 configured to capture three-dimensional profile data of a portion 14 of the equatorial surface 5. The profilometer 13 may be a laser type profilometer. The profilometer 13 may be arranged in a fixed position facing the equatorial surface 5 of the tyre 4 in order to capture a three-dimensional profile of the equatorial surface 5. In other embodiments, the profilometer 13 may be arranged on a robotic arm.

The profilometer 13 is configured to measure a distance between the profilometer 13 and a plurality of points comprised in the portion 14 of the equatorial surface 5. In particular, the plurality of points measured by the profilometer 13 are arranged on a line parallel to z-axis (i.e. parallel to the rotational axis of the tyre). The profilometer 13 may emit a laser beam that is moved from shoulder 6 to shoulder 8 in order to scan the portion 14 of the equatorial surface 5. The profilometer 13 may output a one-dimensional array comprising numerical values indicative of the distance from the rotational axis of the tyre of a corresponding point on the equatorial surface 5, e.g. each specifying the distance between the profilometer 13 and a corresponding point on the equatorial surface 5.

The profilometer 13 may be controlled by the control unit 15. As described below with reference to Figure 2, three-dimensional profile data of the entire equatorial surface 5 can be generated by combining a plurality of profile data measurements. To this end, the control unit 15 may synchronise the acquisition of the profile data with a stepwise rotation of the tyre casing 3 (by the motorised hub 7) such that one of the plurality of profile data is captured for every halt in the stepwise rotation.

In embodiments, the system 1 may comprise means for processing (e.g. a computing device) the line images acquired by the camera 9 and the profile data acquired by the profilometer 13 to perform the steps S103 and/or S105 of the method described below with reference to Figure 2. In other embodiments, the system 1 may be connected (e.g. via the internet) to a remote computing device or to a cloud computing service so as to process the line images acquired by the camera 9 and/or the profile data acquired by the profilometer 13 to perform the steps S103 and/or S105 of Figure 2.

The system 1 may be further configured to also obtain three-dimensional profile data of the outer surface of the sidewalls 4 of the tyre casing 3. In this case, the profilometer 13 may be mounted on a positioning device (e.g. a robotic arm) that is configured to move the profilometer 13 between respective positions for obtaining profile data of the sidewalls 4 or the equatorial surface 5. Alternatively, the system 1 may comprise a second profilometer configured to obtain three-dimensional profile data of (at least a portion of) the outer surface of the sidewalls 4.

The system 1 may further comprise a plurality of tools (not shown in Figure 1) for applying treatment processes to selected portions of the equatorial surface 5. The plurality of tools may comprise abrasive tools, for example a (wire) brush, a carbide wheel, a router cutter and the like. The system 1 may further comprise a robotic arm (or other positioning device) for operating the tools. The tools may be configured to be operated by the robotic arm. The treatment processes may be applied to remove defects on the equatorial surface 5 (the defects may have been identified according to the method described below with reference to Figure 2). The treatment processes may be performed by the robotic arm based on a set of treatment parameters. The treatment parameters may specify the tool that is being used for a particular treatment and the operating conditions of the tool, for example the angular velocity of the tool (typically specified in revolutions per second), the angle of the tool and the like. For example, to perform a treatment process the robotic arm may (releasably) attach to the tool specified in the treatment parameters and operate the tool according to the operating conditions specified in the treatment parameters.

Whilst the system 1 of Figure 1 comprises the profilometer 13, in other embodiments the profilometer 13 may not be present.

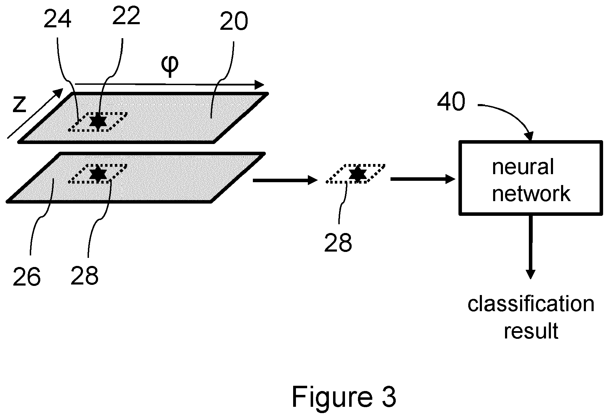

With reference to Figures 2 and 3, a method of detecting defects on a surface of a buffed casing is described. In overview, defects are detected by performing image processing of image data representing (relevant portions of) the equatorial surface 5 of the casing 3, where the image data is generated by combining a plurality of line images. The method may be implemented with the system 1 of Figure 1. In a first step S101, a plurality of line images of a corresponding plurality of imaging portions of the equatorial surface 5 are captured using the linear camera 9. The capturing of the plurality of line images may be synchronised with a stepwise rotation of the tyre casing 3 by the hub 7. In particular, one of the plurality of line images may be captured for every halt in the stepwise rotation.

For example, the control unit 15 may control the hub 7 to rotate the tyre casing 3 by one complete revolution in a stepwise manner (i.e. rotating phases interleaved with stationary phases, "halts"). In each step of the stepwise rotation, the tyre casing 3 is rotated by a predetermined angle (for example by 0.1 degree, 0.5 degree or 1 degree). During each of the stationary phases (i.e. in between any two steps of the stepwise rotation), one of the plurality of line images may be captured. Each acquired line image may be associated with a corresponding angular position of tyre casing 3 (provided by the angular encoder of the hub 7). For each line image, a tuple (ϕ, Z) may be formed where ϕ specifies the angular position of the tyre casing 3 when the respective image was captured and Z = [z₁, z₂, ..., z_{N}] is the corresponding one-dimensional array provided as output by the camera 9 (z₁ to z_{N} representing the numerical values of the N pixels of the camera 9).

In an embodiment, in step S101, profile data of the equatorial surface 5 may also be captured using the profilometer 13. To this end, the capturing of the profile data by the profilometer 13 may be synchronised with the stepwise rotation of the tyre casing 3 such that one of a plurality of profiles is captured for every halt in the stepwise rotation. Each captured profile may be associated with a corresponding angular position of tyre casing 3 (provided by the angular encoder of the hub 7). For each captured profile, a tuple (ϕ, H) may be formed where ϕ specifies the angular position of the tyre casing 3 when the respective profile was captured and H = [h₁, h₂, ..., h_{M}] is a corresponding one-dimensional array provided as output by the profilometer 13 (h₁ to h_{M} representing the numerical values of the distances between the profilometer 13 and M points on the corresponding portion 14 of the equatorial surface 5). In this embodiment, the number of acquired line images and the number of captured three-dimensional profiles may be the same.

In step S103, the plurality of line images are combined to form two-dimensional image data of the equatorial surface 5. In particular, the plurality of line images may be combined based on the associated angular position of the tyre casing 3. For example, each row of the two-dimensional image data may be populated based on a respective tuple (ϕ, Z). The pixel values Z may form the numerical values of the respective row and the angular position ϕ may specify a row index of the respective row with the two-dimensional image data. In broad terms, an effect of using the linear camera 9 is that a two-dimensional image of the complete tyre surface can be generated faster than with conventional methods relying on the acquisition of several two-dimensional images. This is because linear cameras are commonly significantly faster than two-dimensional cameras. Further, because the equatorial surface 5 is a curved surface, a significant region of any acquired, two-dimensional image is often unusable for defect detection because the tyre surface is out-of-focus (thus the time spent on acquiring these regions is typically wasted). Thus, an image segmentation process is needed to select useful information from a two-dimensional image, and the rest of the image is deleted. This process consumes time and computational resources. If the image segmentation is performed after the multiple two-dimensional images are captured, significant memory capacity is required to store the images.

In an embodiment where, in step S101, the plurality of profiles (one-dimensional arrays of distance values) are captured, the plurality of captured profiles may be combined, in step S103, into combined profile data (i.e. a two-dimensional array) which represents the three-dimensional profile of the equatorial surface 5. In this sense, the (combined) profile data may be said to be "three-dimensional". For example, each row of the combined profile data may be populated based on a respective tuple (ϕ, H). The distance values H may form the numerical values of the respective row and the angular position ϕ may specify a row index of the respective row with the combined profile data.

Whilst the generation of the image data and the combined profile data (by performing steps S101 and S103) have been described to be based on synchronising the stepwise rotation of the tyre casing 3 with the respective data acquisition, it is understood that in another embodiment the tyre casing 3 might be continuously rotated while the camera 9 and profilometer 13 acquire the respective data. In this case, the acquired data may be negatively affected by motion blur. By appropriately adjusting the speed of the rotation and the respective acquisition times of the camera 9 and profilometer 13, the effects of motion blur may be mitigated, and image data and combined profile data suitable for defect detection may be obtained.

Referring back to Figure 2, in step S105, the two-dimensional image data of the equatorial surface 5 is processed to detect defects. Defect detection may comprise determining that a surface defect is present on a particular identified portion of the equatorial surface 5. In general, defect detection may be more efficiently and robustly performed by processing the two-dimensional image data instead of processing the line images individually. This is because a defect may be identified (at least in part) by its shape, and commonly found defects on surfaces of buffed casings may extend (in circumferential direction) over several of the line images. Thus the shape of any detected object may be more reliably determined by processing the two-dimensional image data. Any suitable image processing technique may be used to process the image data (for example known object detection algorithms, neural networks such as the neural network model 40 described below with reference to Figures 3, and the like).

In an embodiment, processing the two-dimensional image data may comprise identifying candidate objects and (subsequently) classifying the candidate objects as one of a set of possible tyre defect types (defect classes) by comparing determined properties of the object (e.g. the size, shape and/or colour of the object) to (manually defined or learned) properties of (commonly found) defects.

In broad terms, processing the entire two-dimensional image data can be computationally expensive (because the two-dimensional image data can be large). This may prevent (near) real-time defect detection and may slow down the (largely automated) process of inspecting the buffed tyre casing 3 (and thus decrease the productivity of the automated station). It is therefore desirable to reduce the computational resources needed to process the two-dimensional image data. This may be achieved by identifying one or more regions of interest (ROIs) on the equatorial surface 5 which are likely to have defects and by processing only the portions of the image data that correspond to the ROls. This may be beneficial since a buffed tyre casing has typically only a small number of small defects (typically less than 100 defects, or even less than 10 defects, each of which may typically extend over less than 100 mm²). Thus the number and size of the ROIs can be small and the overall processing time can be reduced.

In an embodiment where the combined profile data of the equatorial surface 5 has been obtained in steps S101 and S103, the combined profile data may be used to identify one or more ROIs on the equatorial surface 5. In an embodiment ROIs are identified by identifying anomalous distance values of the profile data, i.e. distance values that are greater than a predetermined threshold value. Such anomalous distance values may be indicative of a crater (or "skive") on the equatorial surface 5. A ROI may be defined as an area of predetermined size centred around each of the anomalous distance values. In other embodiments, the ROls may be identified by processing the combined profile data by a neural network model (for example, a neural network comprising a convolutional neural network), as a segmentation process. The neural network may be trained to generate these ROIs by supervised learning based on a database of sets of profile data and corresponding ground truth ROls.

Figure 3 illustrates the above described process of identifying ROIs and processing only the image data corresponding to the ROls. Example profile data 20 may be processed to identify an example ROI 24 which is centred around an anomalous distance value indicating the potential defect 22. Next, the ROI 24 of the profile data 20 is mapped to identify a corresponding ROI 28 in example image data 26, i.e. the ROI 24 and the ROI 28 correspond to substantially the same portion of the equatorial surface 5. It is understood that such a mapping may take into account that (at each step of the stepwise rotation of the tyre casing 3) the camera 9 and the profilometer 13 typically probe spatially separated portions 10, 14 of the equatorial surface 5 (as illustrated in Figure 1), and that consequently the row-indices of ROIs 24, 28 are offset to each other by a (fixed) offset. The image data within the ROI 28 can then be processed to detect defects.

In general, a neural network model 40 may be configured to receive an input image of the equatorial surface 5 (e.g. the entire two-dimensional image data or separate portions of the image data corresponding to the identified ROIs). The neural network model 40 may process the input image to identify one or more defects and to classify the detected defects. For example, the neural network 40 may generate, for each detected defect, a score distribution over a set of corresponding possible tyre defect types. The neural network 40 may then provide, as output, the classification result (e.g. a list of the identified defects, the corresponding score distributions, and the positions of the defects with the input image). Based on the score distribution for each defect, one of a corresponding set of defect labels may be assigned to each defect. In an embodiment, the set of defect labels may comprise "clean skive" (associated with a clean area with embedded and exposed belt wires), "rust" (associated with rust on or near belt wires), "frayed metal" (associated with loose belt wires), "no belt" (associated with a non-exposed belt), and "unknown" (associated with defects other than the aforementioned ones).

The neural network model 40 may be of known architecture suitable for performing object detection and classification on input images. For example, the neural network model 40 may comprise a convolutional neural network. A system of one or more computers located in one or more locations may be used to implement the neural network model 40.

In an embodiment, the neural network 40 may comprise a conventional object detection model which is initially pre-trained (e.g. by supervised learning) on a large image dataset drawn from a readily available library, or which has been annotated approximately, e.g. by an automatic process. The neural network 40 may alternatively be trained, or may be further trained, on a training dataset generated by capturing and annotating images of surface defects of buffed tyre casings by an expert. Known techniques of data augmentation may be used to increase the size of the training dataset, and thereby improve the performance of the neural network model 40.

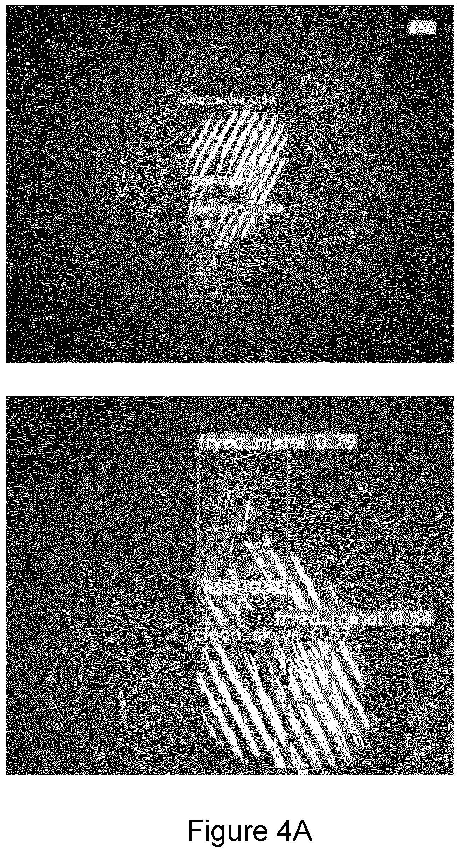

Figure 4A illustrates an example defect detection and classification performed by the neural network 40. Figure 4A shows two images annotated according to the corresponding classification results generated by neural network 40. In this case, the images are conventional two-dimensional images (i.e. not image data generated by combining line images) showing two different portions of a buffed tyre surface. In the upper image of Figure 4A, the neural network 40 detected three defects (labelled by the neural network 40 as "clean skive", "rust", and "frayed metal"). In the lower image of Figure 4A, the neural network 40 detected in four defects (one labelled as "clean skive", one labelled as "rust", and two defects labelled as "frayed metal"). The labels indicated in the examples of Figure 4A correspond to the defect labels with the highest score of the respective score distributions.

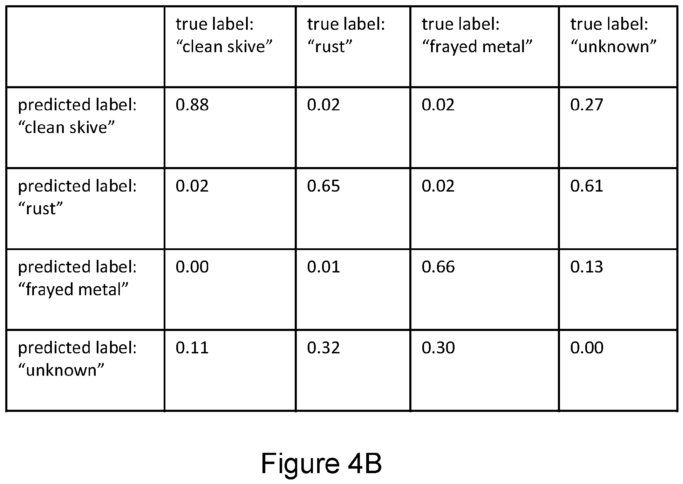

Figure 4B shows a table of an experimentally obtained "confusion matrix" for the neural network 40 (in this example, the set of defect labels consisted of "clean skive", "rust", "frayed metal", and "unknown"). The confusion matrix of Figure 4B compares the labels assigned by the neural network 40 with labels assigned by a human expert. In particular, the diagonal elements of the confusion matrix indicate the probabilities that the neural network 40 labels the corresponding defects with the same label as the human expert. In this example, the average value of the diagonal elements corresponding to the defect types "clean skive", "rust", and "frayed metal" is greater than 0.7 indicating a good classification performance by the neural network 40.

The neural network 40 can typically recognise (and distinguish) a larger number of defect types than conventional methods of processing images of surface defects of buffed casings. As described below in further detail, this provides additional information which can be used to improve the selection of further processing steps for a buffed tyre casing, e.g. whether the casing is suitable for re-treading, and if so how the surface defects of the casing are best treated.

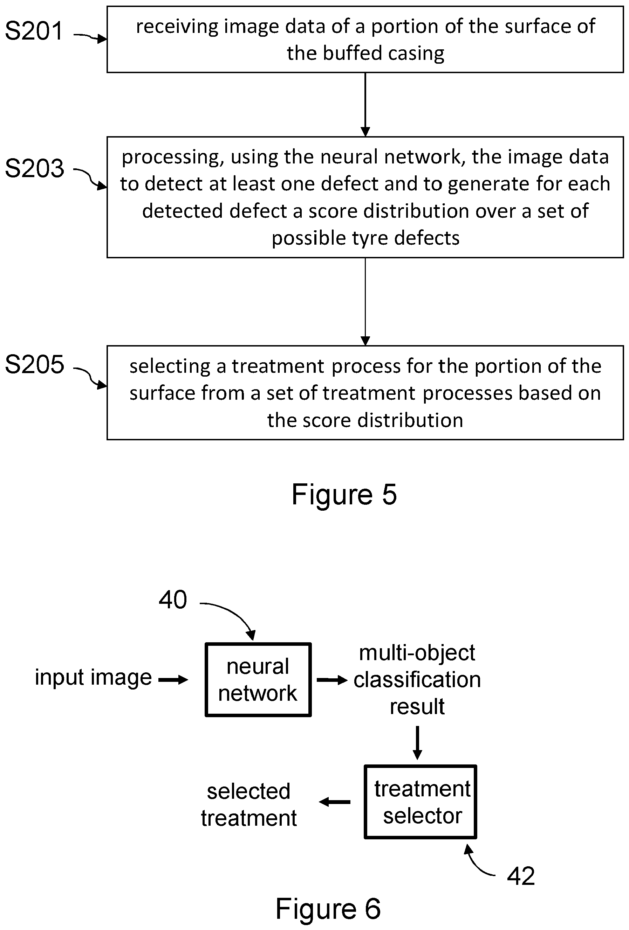

In general, a buffed tyre casing that has surface defects may need to be treated before the tyre can be further processed, i.e. the defects may need to be removed. As described above with reference to system 1, treatment processes may be performed by tool supported on a positioning device (e.g. a robotic arm) based on a set of treatment parameters. The treatment parameters may specify the tool that is being used for a particular treatment and the operating conditions of the tool, for example the angular velocity of the tool (typically specified in revolutions per second), the angle of the tool and the like. A treatment process for a specific portion of a tyre may be selected from a number of available treatments. It is desirable to provide a method which enables an automatic selection of the most suitable treatment such that the need for human intervention in further reduced. Such a method for selecting a treatment process for removing defects from a surface of a buffed casing is described below with reference to Figures 5. Figure 6 shows schematically a system for implementing the method of Figure 5. One or more computers located in one or more locations may be used to implement the data processing steps of the method of Figure 5.

In step S201, image data of a portion of a surface of a buffed casing is received. The portion of the surface may have at least one surface defect. For example, the image data may represent a portion of the equatorial surface 5 of the casing 3. The received image data is typically a two-dimensional array of numerical values.

In general, the received image data may be captured in any suitable manner, for example with a conventional (two-dimensional) camera or by combining a plurality of line images captured by using a linear camera. In an embodiment, the received image data may be generated by system 1 as described above. The received input image data may correspond to a ROI of the surface which has been identified as described above with reference to Figure 3.

In step S203, the received image data is processed, using a neural network model, to detect defects and to generate for each detected defect a score distribution over a set of defect types. Step S203 may be implemented using the neural network model 40 as described above with reference to Figure 3.

In step S205, the output of the neural network 40 (i.e. the score distribution) is provided to a treatment selection module 42 that selects a treatment process (for the portion of the surface represented in the received image data) from a set of treatment processes based on the score distribution. In other words, a treatment process is selected based on the detected defects. In general, if only one defect (or multiple defects of the same type) is detected, the selection of the treatment process may be performed based on a predetermined, one-to-one mapping between defect types and treatment processes. Such a one-to-one mapping is no longer suitable when multiple defects of different types are detected in the same portion of the surface (i.e. when the multiple defects are close to each other, for example as shown in the examples of Figure 4). In this case, the treatment process may be selected based on the combination of defect types that are detected in the input image. A subset of a set of possible defect labels is assigned to the portion of the surface shown in the image, and a treatment the surface is selected based on that subset of defect labels.

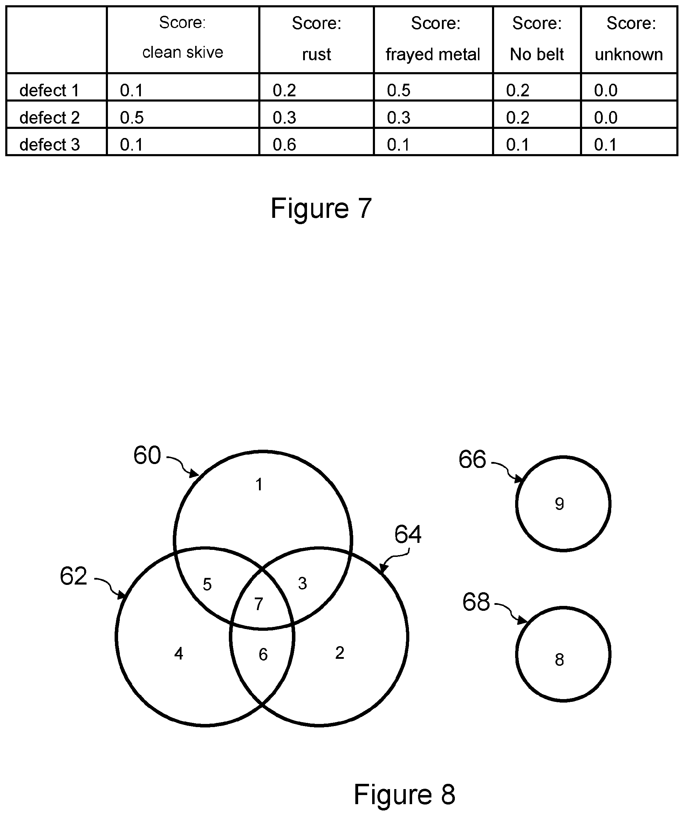

The treatment selection module 42 may process the received score distributions to assign one defect label to each detected defect. For example, the treatment selection module 42 may assign (to each detected defect) the defect label with the highest corresponding score in the respective score distribution. To illustrate this, Figure 7 shows a table with example score distributions for an input image in which three defects have been detected. For each of the defects, a corresponding row of Figure 7 gives five numerical values (scores) which collectively form the score distribution over a set of four defect types, plus an optional score ("unknown") indicating that the defect is none of the four defect types. The treatment selection module 42 may assign the label "frayed metal" to "defect 1" because the score for this label is higher than the score for the other labels. Similarly, the treatment selection module 42 may assign the label "clean skive" to "defect 2", and the label "rust" to "defect 3".

Optionally, if the score distribution meets an uncertainty criterion (e.g. none of the scores of the score distribution for set of defect types is above a threshold and/or the score for "unknown" is the highest), the treatment selection module 42 may assign the label "unknown" to the defect (instead of the defect type for which the score distribution happens to be highest). "Unknown" is thus one of the set of possible defect labels, though it is not associated with any specific defect type in the set of defect types.

Next, the treatment selection module 42 may process the assigned labels to determine a treatment score. In an embodiment, an integer number (one to nine) is determined as the treatment score depending on the assigned labels of the detects detected for a particular input image. Figure 8 shows a Venn diagram illustrating an example method of determining the treatment score. In Figure 8, the rings 60, 62, 64, 66 and 68 represent respectively the defect labels "clean skive", "rust", "frayed metal", "no belt", and "unknown". This is a predetermined set of defect labels, optionally including "unknown" which indicates that the defect has a defect type which cannot be identified (e.g. is not one of the set of (four) defect types on which the score distribution is based). Thus, a point within a first subset of the rings (e.g. rings 60 and 62) but outside the other rings (e.g. rings 64, 66 and 68) represents an image having defects of the type(s) corresponding to the subset of rings, but no defects of the type(s) corresponding to the other rings (e.g. clean skive and rust defects, but no other defects).

In Figure 8, each logical set represented in the Venn diagram (i.e. each subset of the defect labels) is assigned a corresponding treatment score. The treatment score may be different for each subset of defect labels. At least one of the subsets of defect labels includes multiple corresponding ones of the defect labels. The treatment score is indicated in Figure 8 as the number given at the overlap of the areas representing those defect labels. In other words, the treatment scores indicate respective subsets of the defect labels. For example, for an input image in which three defects, having the score distributions of Figure 7, are detected (i.e. at least one frayed metal defect (defect 1); at least one clean skive defect (defect 2); and at least one rust skive (defect 3)), the treatment selection module 42 may determine a treatment score of 7 based on the Venn diagram of Figure 8. This is because the table of Figure 7 includes defects of the type "clean skive", "rust", and "frayed metal", and the corresponding logical set (i.e. the portion where the rings 60, 62 and 64 overlap, corresponding to the subset of defect labels made up of "clean skive", "rust" and "frayed metal") is assigned to a treatment score value of 7.

Note that treatment scores are typically not defined for all possible corresponding subsets of the defect labels. For example, the defect "no belt" may be so severe that it is not necessary to consider situations in which another type of defect is detected in the same portion of the tyre. Thus, if at least one defect of the type "no belt" is detected in the image, the image is assigned the treatment score 9 (corresponding to the single defect label "no belt") irrespective of whether defects of other types are present also.

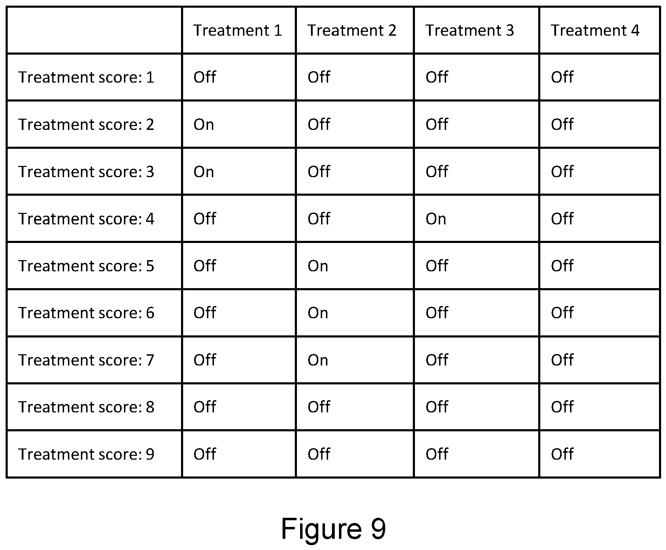

The treatment selection module 42 may select the treatment process based on the determined treatment score. For example, each subset of defect labels may be mapped by mapping data to a particular treatment process of a set of treatment processes. Figure 9 shows example mapping data. In this example, the set of treatment process comprises four treatments. In each row (i.e. for each treatment score), one treatment column is marked as "on" entry, indicating that this treatment is selected for the respective treatment score. For example, a "treatment 2" may be selected for a treatment score of 5.

Note that the treatment specified by the mapping data for a subset of defect labels which includes at least two defect labels, may be different from at least one of the treatments to which the mapping data maps each of the defect labels of the subset individually. For example, if only a defect of the type "frayed metal" is detected, the corresponding treatment score is 2, which is mapped under the mapping data of Figure 9 to treatment 1. If only a defect of the type "rust" is found, the corresponding treatment score is 4, which is mapped under the mapping data of Figure 9 to treatment 3. However, if both "frayed metal" and "rust" are found in the image, i.e. the subset of defect labels is the one labelled by the treatment score 6, which is mapped under the mapping data of Figure 9 to treatment 2, i.e. a different treatment from the respective treatments corresponding to both treatment scores 2 and 4.

The mapping data of Figure 9 does not map treatment scores 8 and 9 to any treatment. Treatment score 8 indicates the defect label "unknown", so an appropriate treatment cannot be determined. Treatment score 9 indicates the defect label "no belt", and no treatment may be suitable for a defect of the corresponding type. In the case that a given image of the tyre is assigned one of these two treatment scores (subsets of the defect labels), the processing of the tyre may terminate.

Otherwise, the selected treatment process may then be applied to the relevant portion of the surface, i.e. the portion of the surface that is represented in the input image. In embodiments, the selected treatment process may be applied locally only to portions of the surface which have detected defects. For example, the output of the neural network 40 may comprise (in addition to the aforementioned score distribution), for each detected defect, coordinates specifying the location of the defect within the input image and an information specifying an extent of the defect. Thus, the areas of the surface having defects can be determined from the output of the neural network 40 (e.g. the area inside the rectangles shown in Figure 4), and the selected treatment may be applied predominantly to these areas.

Embodiments of system 1 may comprise one or more computing devices to implement steps S201-S205, as described above. In some of these embodiments, the system 1 may comprise tools and a positioning device (e.g. robotic arm) for operating the tools, and the selected treatment process may be applied using system 1.

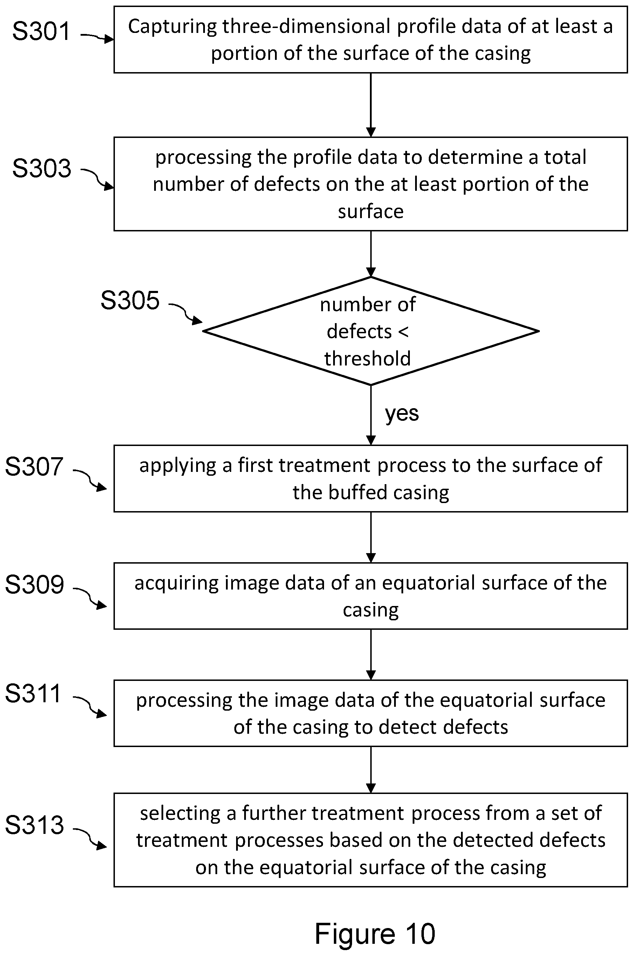

In broad terms, acquiring and processing image data of an equatorial surface of a casing can be a relatively slow process (even when the image data is captured by a linear camera as described above). Thus, to increase the productivity (of an automatic defect inspection and skiving station), it can be advantageous (i.e. more time and resource efficient) provide a method in which a first treatment process is applied to the equatorial surface of the casing before acquiring and processing the image data. Such a method is described with reference to Figure 10. The method is described as being implemented by using an embodiment of the system 1 of Figure 1 which further comprises one or more computing devices, tools and a robotic arm for operating the tools.

In step 301, three-dimensional profile data of at least a portion of the surface of the casing 3 is captured by using a profilometer 13. For example, three-dimensional profile data of the equatorial surface 5 may be captured (and combined), as described above with reference to Figures 1 and 2. Additionally or alternatively, three-dimensional profile data of at least a portion of a sidewall surface 4 of the casing 3 is captured. In step 303, the profile data is processed (e.g. by the one or more computing devices) to determine a total number of defects on the at least one portion of the surface. It is understood that this can be done in a number of ways. For example, defects can be detected from the profile data by identifying anomalous distance values of the profile data, i.e. distance values that are greater than a predetermined threshold value. The predetermined threshold value may be selected experimentally, based on a desired trade-off between the number of false-positive and false-negative defect identifications. In other embodiments, a neural network model (for example, a neural network comprising a convolutional neural network) may be used to process the profile data to detect defects based.

In step S305, it is determined whether the total number of defects is below a predefined defect number threshold. If the total number of defects is equal or above the defect threshold number, it may be determined that the buffed tyre casing 3 is not suitable for re-treading. This is because such tyre, once re-treaded, might not be considered safe (enough) to be deployed for use (even if these defects were to be removed by treatment). The defect number threshold may be fixed or may be selected based on the tyre type (e.g. truck tyre, bus tyre, and the like). The defect number thresholds for different tyre types may be different because different safety considerations and/or regulations apply. Generally, it is advantageous to determine whether or not a certain tyre is suitable for re-treading before further (time-intensive) steps (such as acquiring and processing images the surface or applying treatments) are performed.

If the total number of defects is below the defect threshold number, a first treatment process is applied to the surface of the buffed casing (step S307). The first treatment process may be applied to the entire outer surface of casing 3 or only to a portion of the outer surface of casing 3 such as the equatorial surface 5, the sidewalls 4 or local portions of the surface around the defects detected in step S303. The first treatment process may comprise applying a (wire) brush to the outer surface of casing 3. Generally, the first treatment process (i.e. the tool and the operating conditions) may be selected to be effective for a wide range of frequently found tyre defects such that the overall number of defects is reduced before the further (defect type specific) treatments are selected (i.e. steps S309-S313).

In step S309, image data of the equatorial surface 5 of the casing 3 is acquired. For example, the image data may be acquired using the linear camera 9 as described above with reference steps S101 and S103 of Figure 2. Alternatively, a conventional (two-dimensional) camera may be used to acquire the image data. In step S311, the image data of the equatorial surface 5 of the casing 3 is processed to detect defects. For example, the image data of the equatorial surface 5 of the casing 3 may be processed as described above with reference to step S105 of Figure 2 and/or steps S203 of Figure 5. In step S313, a further treatment process is selected from a set of treatment processes based on the detected defects on the equatorial surface of the casing. The further treatment process may be selected as described above with reference to step S205 of Figure 5. Further in step S313, the selected further treatment process may be applied to the equatorial surface 5 of the buffed casing 3 (for example as described above with reference to Figure 5).

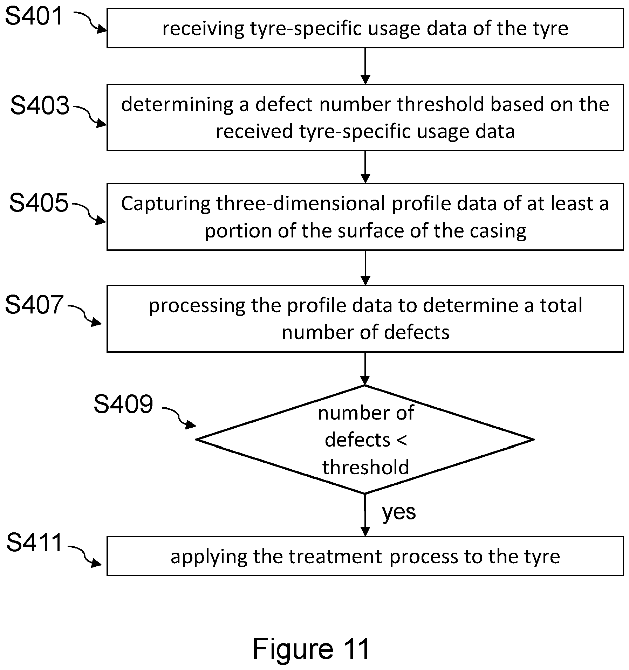

As mentioned above, it can be advantageous to consider the tyre type (e.g. truck tyre, bus tyre, and the like) when assessing whether or not a buffed tyre casing is suitable for re-treading. In addition to the tyre type, further information about the tyre may be used for such an assessment. This may enable more accurate and informed decisions, and thus contributes to the implementation of safety considerations and cost reduction (e.g. by avoiding further processing steps if the tyre is found to be not suitable). It desirable to provide a method in which the information about a specific tyre, e.g. the history of the tyre, is considered when assessing the tyre's suitability for re-treading. Such a method is described with reference to Figure 11. The method may be implemented with embodiments of system 1.

In step S401, tyre-specific usage data of the tyre 3 is received. In general, the tyre-specific usage data comprises information which specify the tyre 3. The tyre-specific usage data may specify a previous application of the tyre 3 (e.g. truck tyre, bus tyre, and the like). Additionally or alternatively, the tyre-specific usage data may specify other details of the tyre 3, for example the date of manufacture, the manufacturer, a model number, a batch or serial number, material properties, and/or further details of tyre specifying the tyre's life cycle (e.g. the servicing history of the tyre 3). In an embodiment, the tyre-specific usage data may specify a previous measurement of a physical quantity of the tyre 3 such as information about defects detected (e.g. number of defects, defect types, and the like) during a previous re-treading process applied to the tyre. The tyre-specific usage data may be stored in a device that is mounted or otherwise attached to the tyre 3, for example a Radio Frequency Identification (RFID) tag or a tyre-mounted sensor (TMS) unit received (or retrieved). Such a device may be read (by a suitable reading device) to retrieve the tyre-specific usage data. Additionally or alternatively, the tyre-specific usage data may be stored in (remote) database (e.g. stored in a cloud server). Such a database may store the tyre-specific usage data for a plurality of tyres. In this case, the tyre 3 may have an associated identification code which uniquely identifies the tyre 3 among the tyres of thee plurality of tyres. The tyre-specific usage data may be retrieved from the database based on the identification code. The identification code may be provided directly on the tyre 3 or may be stored on a device mounted on the tyre 3 (e.g. the RFID tag or the TMS).

In step S403, a primary defect number threshold is determined based on the received tyre-specific usage data. In other words, the primary defect number threshold for a certain tyre is determined by considering the particular tyre-specific usage data of this tyre. In an embodiment, a corresponding set of further defect number thresholds is determined based on the received tyre-specific usage data. Each further defect number threshold may be associated with one label of the set of defect labels. For example, a defect number threshold for each of the defect labels "clean skive, "rust", "frayed metal", "no belt", and "unknown" may be determined based on the received tyre-specific usage data.

In step S405, three-dimensional profile data of at least a portion of the surface of the tyre casing 3 is captured by using a profilometer. For example, three-dimensional profile data of the equatorial surface 5 may be captured (and combined), as described above with reference to Figures 1 and 2. Additionally or alternatively, three-dimensional profile data of at least a portion of a sidewall surface 4 of the casing 3 is captured. In step S407, the profile data is processed to determine a total number of defects (e.g. as described above with reference to step S303 of Figure 10). In step S409 (as in S305 of Figure 10), it is determined whether the total number of defects is below the primary defect number threshold. If the total number of defects is equal or above the primary defect threshold number, it may be determined that the buffed tyre casing 3 is not suitable for re-treading. If the total number of defects is below the primary defect threshold number, the methods continues with step 411. In step S411, if no further defect number thresholds have been determined in step S403, a treatment process for removing the defects may be applied to the surface of the buffed casing 3.

Alternatively, in an embodiment where further defect number thresholds have been determined in step S403, step S411 may comprise acquiring image data of the equatorial surface 5 of the casing 3 (for example as described above with reference to S309 of Figure 10). Step S411 may further comprise processing the image data to detect surface defects, and associate with each detected defect at least one defect label from a set of defect labels (for example as described above with reference to step S203 of Figure 5). A total number of defects associated with each label of the set of defect labels may be determined. Next, for each label in the set of defect labels, the total number of defects associated with the respective label is compared to the corresponding further defect number threshold. If it is determined that, for each label in the set defect labels, the total number of defects associated with the respective label is lower than or equal the corresponding further defect number threshold, a treatment is applied to the surface of the buffed casing 3. If it is determined that, for one of the labels in the set defect labels, the total number of defects associated with the respective label is higher than the corresponding further defect number threshold, it may be determined that the tyre casing 3 is not suitable for re-treading. Considering individual threshold values for the various defect types enables more accurate and informed decisions about the further processing and subsequent use of the tyre casing 3.

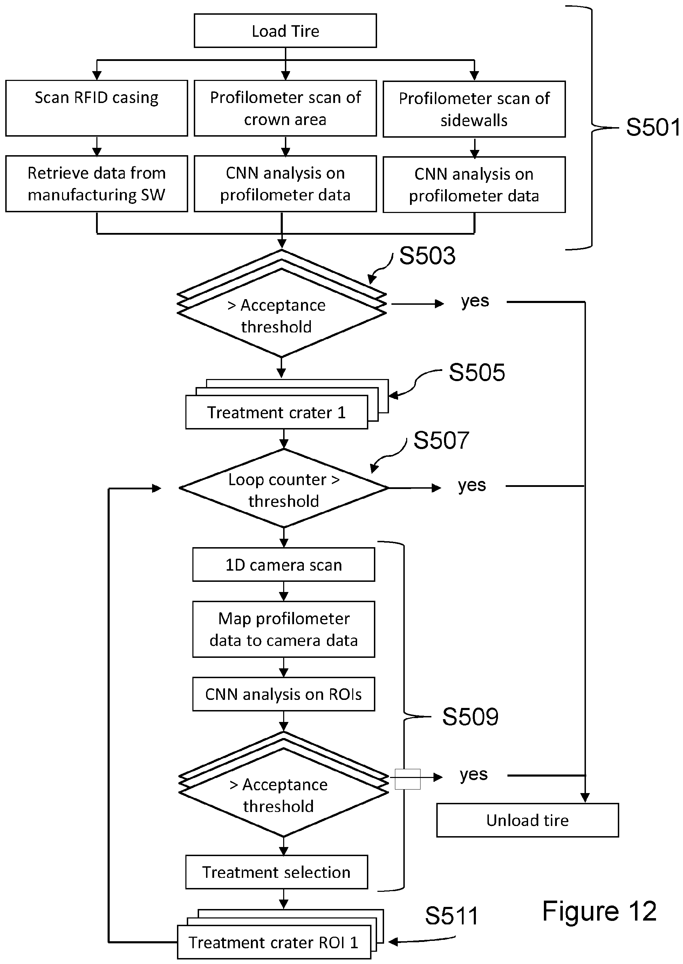

Figure 12 illustrates a method for performing automatic skiving of a buffed casing. The method combines several aspects of the methods described above with reference Figures 2, 5, 10 and 11. The method may perform reliable, efficient and largely automated defect detection, detect identification, treatment selection and treatment application. The method may be implemented using embodiments of the system 1 described above with reference to Figure 1.

In a first step S501, a tyre casing 3 is loaded and an initial inspection is performed. To this end, tyre-specific usage data is retrieved as described for step S401 of Figure 11 (e.g. by scanning a RFID tag of the tyre 3 to retrieve the tyre-specific usage data or to retrieve an identification code and looking up the corresponding tyre-specific usage data in a database storing the tyre-specific usage data). Primary defect number thresholds for the equatorial surface 5 and the sidewalls 4 are determined based on the retrieved tyre-specific usage data. Further, three-dimensional profile data of the equatorial surface 5 and sidewalls 4 of the tyre casing 3 is captured. The profile data is processed (as described in S303 of Figure 10, e.g. by using a neural network) to detect defects and determine a total number of defects on the equatorial surface 5 and a total number of defects on the sidewalls 4. In step S503, the total number of defects on the equatorial surface 5 and sidewalls 4 are compared to the respective primary defect number thresholds. If any one of the total number of defects on the equatorial surface 5 and the total number of defects on the sidewalls 4 is larger than the respective primary defect number thresholds, it may be determined that the tyre casing 3 is not suitable for re-treading and the tyre may be unloaded.

If the total number of defects on the equatorial surface 5 and the total number of defects on the sidewalls 4 are lower than or equal to the respective primary defect number thresholds, a first treatment (or a plurality of predefined treatments) is applied to the tyre casing 3 (as described above with reference to step S307 of Figure 10).

Next, a sequence of defect detection and defect treatment steps may be repeatedly applied to the equatorial surface 5. This can be implemented by a loop counter (S507) which keeps track of the number of performed iterations and compares this number to a threshold value. If the loop counter determines that the number of performed iterations is larger than the threshold, the method of Figure 12 is completed. If the number of performed iterations is lower than or equal to the threshold, step S509 is performed.

In step S509, the image data of the equatorial surface 5 is generated by combining line images captured using the linear camera 9 (as described with reference to steps S101 and S103 of Figure 2). ROls of the image data (identified based on the profile data as described with reference to Figure 3) are processed by the neural network 40 to detect defects in the ROIs and assign defect labels. The tyre-specific usage data (stored in a device mounted on the tyre 3 or in a database) may be updated based on the output of the neural network 40. A total number of defects associated with each label of the set of defect labels is determined.

A set of further defect number thresholds is determined based on the received tyre-specific usage data, where each further defect number threshold may be associated with one label of a set of defect labels (as described with reference to step S403 of Figure 11). If for one of the labels in the set defect labels, the total number of defects associated with the respective label is higher than the corresponding further defect number threshold, it may be determined that the tyre casing 3 is not suitable for re-treading. If for each of the labels in the set defect labels, the total number of defects associated with the respective label is lower than or equal to the corresponding further defect number threshold, a treatment for each identified ROI is selected based on the corresponding output of the neural network 40 (as described with reference to S205). In step S511, the selected treatments are applied to the respective portions of the equatorial surface 5 and the counter for the number of performed iterations is increased. Next, step S507 is performed again, where the loop counter checks whether the number of performed iterations exceeding the threshold value. If so, the method is completed. If not, the steps S509 and S511 are performed again.

Those skilled in the art will appreciate that various modifications may be made to the above described embodiment without departing from the scope of the present invention.

## Claims

1. A method of selecting a treatment process for removing defects from a surface of a buffed casing of a pneumatic tyre using a neural network model, the method comprising:
receiving image data of a portion of the surface of the buffed casing;
processing, using the neural network, the image data to detect at least one defect and to generate for each detected defect a corresponding score distribution over a set corresponding possible tyre defect types, and
selecting a treatment process for the portion of the surface from a set of treatment processes based on the at least one score distribution.

2. The method according to claim 1, wherein the neural network model comprises a convolutional neural network.

3. The method according to claim 1 or 2 further comprising a step of applying the selected treatment process to the portion of the surface.

4. The method according to any preceding claim further comprising assigning one of a set of possible defect labels to each detected defect based on the corresponding score distribution.

5. The method of claim 4 in which the set of possible defect labels comprises labels associated with corresponding ones of the set of defect types, a defect label associated with one of the defect types only being assigned to defects for which, in the corresponding score distribution, the score for that defect type is highest.

6. The method according to claim 4 or 5, in which the treatment process is selected by determining a subset of the set of defect labels for which at least one detected defect was assigned that defect label, and selecting the treatment based on mapping data which maps subsets of the defect labels to corresponding treatments.

7. The method of claim 6 in which the mapping data includes mapping data for at least one subset of defect labels which includes at least two defect labels, and which maps that subset of defect labels to a treatment which is different from at least one of the treatments to which the mapping data maps each of the defect labels of the subset individually.

8. The method of claim 6 or claim 7 in which, upon assigning at least one defect label to a detected defect, the processing of the tyre is terminated.

9. The method of any preceding claim which includes determining that the score distribution for at least one detected defect meets an uncertainty criterion, and, upon so determining, assigning to the defect a defect label indicating that the type of the defect cannot be determined.

10. One or more non-transitory computer storage media storing instructions that when executed by one or more computers cause the one or more computers to perform operations of the respective method of any of claims 1 to 9.

11. A computer program comprising instructions which, when the program is executed by a computer, cause the computer to carry out the steps of the method of any of claims 1 to 9.

12. A system for applying a treatment process for removing defects from a surface of a buffed casing of a pneumatic tyre, the system comprising:
a computing device configured to select a treatment process according to the method of any of claims 1 to 9, and
a tool attached to a robotic arm configured to apply the selected treatment process to the portion of the surface.
